# EUROPEAN PATENT SPECIFICATION

(11) **EP 2 075 665 B1**
(45) Date of publication and mention of the grant of the patent: **10.04.2013**
(21) Application number: 08002156.1
(22) Date of filing: 06.02.2008
(51) Int. Cl.: G05G 1/30, G05G 5/03, F16H 59/20

(54) **Device for varying the resistance to depression of the accelerator pedal of a motor vehicle**
Vorrichtung zum Ändern des Druckwiderstands des Gaspedals eines Kraftfahrzeugs
Dispositif pour faire varier la résistance à la dépression de la pédale d'accélérateur d'un véhicule à moteur

(30) Priority: 05.12.2007 IT TO20070149 U
(43) Date of publication of application: 01.07.2009
(73) Proprietor: Plastic Components and Modules Automotive S.p.A., 10095 Grugliasco (TO) (IT)
(72) Inventor: Cavaglia', Renato, 10040 Volvera (TO) (IT); Miletto, Beniamino, 10050 Vaie (TO) (IT)
(74) Representative: Rondano, Davide

(56) References cited:
- EP-A- 1 010 595
- EP-A- 1 098 237
- DE-C1- 19 521 821
- FR-A- 2 847 356
- US-A1- 2002 152 831
- US-A1- 2006 130 603
- US-A1- 2007 137 400

## Description

The present invention relates to a device for varying the resistance to depression of a control pedal of a motor vehicle, and in particular for the accelerator pedal.

The prior art envisages that, in order to give the driver the feel that the accelerator pedal has reached almost the end of its stroke, a device is used, referred to as "kickdown", which defines a point of the stroke of the pedal, in which there is a sudden increase in the thrust required to push the pedal down to obtain a full acceleration, so as to warn the driver that he has practically arrived at end of the stroke of the pedal. Consequently, in the course of the present description, for simplicity, the term "kickdown" will be used to indicate the function described previously.

The known systems described in the patent documents Nos. US 6,626,061 and EP 0 974 886 and elsewhere illustrate a kickdown device, constituted by a plunger of small dimensions, the stroke of depression of which is controlled by an elastic means.

Even though this type of device is quite simple, it envisages the use of at least three constructional parts: the plunger; the elastic means; and the body of the device in which the plunger slides. Consequently, even though the cost is low, it becomes significant if compared to the overall cost of the pedal.

Another known kickdown system is disclosed in EP 1 098 237.

The purpose of the present invention is to provide a kickdown device that will be extremely simple, will no longer have constructional parts, and will have a very low cost.

The above purpose is achieved by the present invention, the subject of which is a kickdown device that presents the characteristics specified in Claim 1.

Further characteristics and advantages will emerge clearly from the ensuing description, with reference to the attached plate of drawings, which is provided purely by way of non-limiting example and in which:

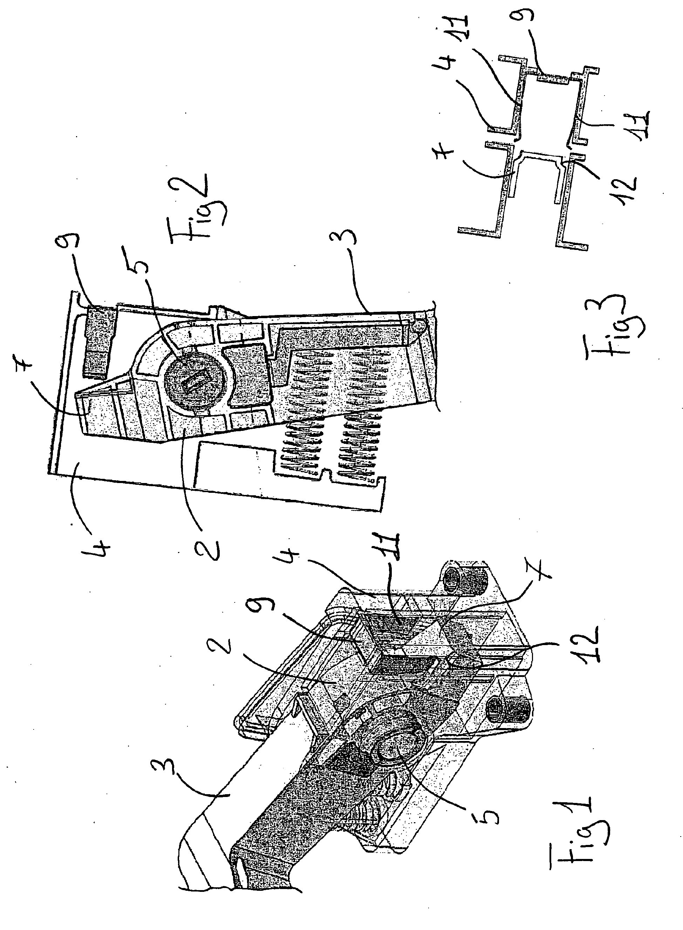

- Figure 1 is see-through perspective view of the support and of the top part of a control pedal of a motor vehicle provided with the device according to the invention;
- Figure 2 is a partially cross-sectional side view of the support and of the top end of the pedal illustrated in Figure 1, where the spring that constitutes the kickdown device according to the invention is visible; and
- Figure 3 is a partial view from above and in enlarged cross section of the support and of the top end of the pedal illustrated in Figure 1, where the spring that constitutes the kickdown device is visible once again in cross-sectional view.

With reference to the figures, designated as a whole by one is a pedal for controlling an actuator mounted on a motor vehicle and made of plastic material, said pedal being designed to control the actuator via an electrical or electronic control system, i.e., without any need for a mechanical connection, such as a Bowden cable.

The pedal is pivoted, at the top end 2 of its arm 3, on a support 4, which is in turn fixed to a fixed point of the vehicle via common fixing means, for example, screws (not represented). The axis of fulcrum is constituted by a cylindrical pin 5 made of plastic material. The body of the pedal has at its top end 2 a prolongation 6 beyond the fulcrum that forms a sort of finger 7 with a substantially rectangular section and, in the embodiment illustrated, open on one side.

Set on the support 4, at the height of the finger 7, in front of and facing it, is a U-shaped leaf spring 9, inserted in a slot 10, which keeps it in position. Made on the finger 7, in an area corresponding to the arms 11 of the spring, are two angular chamfers 12 that work in combination with the curved ends of the arms, for creating the sensation of resistance to depression necessary for obtaining the required kickdown effect. As may be readily appreciated, when the pedal is pressed, it brings about rotation of the finger 7 towards the spring 9 until it encounters the ends thereof, which will penetrate into the chamfers 12 causing a first resistance to depression. Said resistance will then continue to increase when the ends of the spring, having come out of the chamfers 12, come to slide against the side walls of the finger 7, which penetrates into the spring itself.

With the device described, it will then be very simple to vary the resistance to depression by varying the strength of the spring or else the profile of the chamfers, or else even both together.

Conveniently, the spring will be made of spring steel.

## Claims

1. A device for varying the resistance to depression of the accelerator pedal of a motor vehicle the device comprising, among other things, a pedal body (3) made of plastic material pivoted at one end thereof on a support (4), which is also made of plastic material; the body (3) of the pedal comprises a finger (7), designed-to interact in a preset point of the stroke of depression of the pedal with a leaf spring (9), fixed on the support (4), that opposes the aforesaid stroke; wherein the leaf spring (9) is U-shape and the finger (7) is shaped like a parallelepiped, the edges of the finger, facing the spring (9), have angular chamfers (12) designed to receive the ends of the spring, **characterized in that** the arms (11) of the U-shape leaf spring (9) have an inner surface substantially perpendicular to the pedal body pivot axis.

2. The device according to Claim 1, **characterized in that** the dimensions of the spring are such that the finger (7) is designed to fit frictionally inside it.

## Patentansprüche

1. Vorrichtung zum Variieren des Widerstandes gegenüber einem Niederdrücken des Beschleunigungspedals eines Kraftfahrzeugs, wobei die Vorrichtung unter anderem einen Pedalkörper (3) umfasst, hergestellt aus Plastikmaterial, welcher an einem Ende auf einer Halterung (4) drehbar gelagert ist, welche auch aus Plastikmaterial hergestellt ist; der Pedalkörper (3) umfasst eine Fortführung (7), die so ausgelegt ist, dass sie in einem vorgegebenen Punkt des Pedalwegs mit einer Blattfeder (9) interagiert, welche entgegen dem Pedalweg auf der Halterung (4) fixiert ist, wobei die Blattfeder (9) U-förmig ist und die Fortführung (7) wie ein Parallelepiped geformt ist und die der Feder (9) zugewandten Ränder der Fortführung abgewinkelte Einbuchtungen (12) aufweisen in der Form, dass sie die Enden der Blattfeder aufnehmen können, **dadurch gekennzeichnet, dass** die Arme (11) der U-förmigen Blattfeder (9) eine innere Oberfläche haben, die im Wesentlichen rechtwinklig zur Rotationsachse des Pedalkörpers steht.

2. Die Vorrichtung gemäß Anspruch 1, **dadurch gekennzeichnet, dass** die Abmessungen der Feder so sind, dass die Fortführung (7) dazu ausgelegt ist, reibschlüssig in die Feder zu passen.

## Revendications

1. Dispositif pour faire varier la résistance à la dépression de la pédale d'accélérateur d'un véhicule à moteur, le dispositif comprenant, entre autres, un corps de pédale (3) constitué de matière plastique en pivotement à l'une de ses extrémités sur un support (4), qui est également constitué de matière plastique; le corps (3) de la pédale comprenant un doigt (7) conçu pour interagir en un point prédéterminé de la course de dépression de la pédale avec un ressort à lames (9), fixé sur le support (4), qui s'oppose à la course susdite; tandis que le ressort à lames (9) a une forme en U et que le doigt (7) a une forme semblable à un parallélépipède, les bords du doigt, en face du ressort (9) ont des chanfreins angulaires (12) conçus pour recevoir les extrémité du ressort, **caractérisé en ce que** les bras (11) du ressort à lames en forme de U (9) ont une surface interne substantiellement perpendiculaire à l'axe de pivotement du corps de pédale.

2. Dispositif selon la revendication 1, **caractérisé en ce que** les dimensions du ressort sont telles que le doigt (7) est conçu pour s'ajuster en friction à l'intérieur de celui-ci.
